(19) Europäisches Patentamt
European Patent Office
Office européen des brevets

(11) **EP 4 077 212 B1**

(12) **EUROPEAN PATENT SPECIFICATION**

(45) Date of publication and mention of the grant of the patent:
**07.02.2024 Bulletin 2024/06**

(21) Application number: **19832671.2**

(22) Date of filing: **19.12.2019**

(51) International Patent Classification (IPC):
***C01B 17/80*** (2006.01) ***B01D 53/14*** (2006.01)
***C01B 17/76*** (2006.01) ***C01B 17/765*** (2006.01)
***B01D 53/18*** (2006.01)

(52) Cooperative Patent Classification (CPC):
**C01B 17/806; B01D 53/1481; B01D 53/18; C01B 17/76; C01B 17/7655;** B01D 2251/506; B01D 2252/10; Y02A 50/20

(86) International application number:
**PCT/EP2019/086448**

(87) International publication number:
**WO 2021/121612 (24.06.2021 Gazette 2021/25)**

# (54) A VENTURI ABSORBER TUBE FOR ABSORBING SULFUR TRIOXIDE IN SULFURIC ACID

VENTURI-ABSORBERROHR ZUM ABSORBIEREN VON SCHWEFELTRIOXID IN SCHWEFELSÄURE

TUBE ABSORBEUR VENTURI POUR L'ABSORPTION DE TRIOXYDE DE SOUFRE DANS DE L'ACIDE SULFURIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(43) Date of publication of application:
**26.10.2022 Bulletin 2022/43**

(73) Proprietor: **Metso Metals Oy**
**02230 Espoo (FI)**

(72) Inventors:
- **DAUM, Karl-Heinz**
  **65549 Limburg (DE)**
- **BRÄUNER, Stefan**
  **Scarborough WA 6019 (AU)**

(74) Representative: **Keil & Schaafhausen Patentanwälte PartGmbB**
**Friedrichstraße 2-6**
**60323 Frankfurt am Main (DE)**

(56) References cited:
**GB-A- 1 397 256**
**US-A- 3 533 748**
**US-A- 4 029 751**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 077 212 B1

## Description

The invention deals with a venturi absorber tube for absorbing sulfur trioxide in sulfuric acid, whereby the venturi features a converging section, a throat section and a diverging section, with a first inlet at its top through which hot process gas containing sulfur trioxide is introduced, with a device for spraying sulfuric acid co-currently to the sulfur trioxide gas stream, a first outlet to withdraw liquid parts and a second outlet to withdraw gaseous parts, an internal installation in the diverging section.

Sulfuric acid is a chemical compound of sulfur with the chemical formula $H_2SO_4$. It is an oily, very viscous and hygroscopic liquid colorless at room temperature, which is one of the strongest acids and is highly corrosive.

Starting substance for the sulfuric acid production for the most part is elemental sulfur which is obtained in large quantities during the desulfurization or softening of natural gas and crude oil and is produced e.g. by the Claus process. The sulfur thus obtained is burnt with the oxygen present in air, so that sulfur dioxide ($SO_2$) is obtained:

$$S + O_2 \rightarrow SO_2$$

By a usually heterogeneous catalysis with a vanadium catalyst, sulfur trioxide ($SO_3$) then is produced from the sulfur dioxide:

$$2SO_2 + O_2 \xrightarrow{Cat} 2SO_3.$$

A further starting substance for the production of sulfuric acid are off-gases from the pyrometallurgical production of non-ferrous metals (e.g. copper, zinc, nickel, lead, molybdenum) from sulfidic ores.

The sulfur trioxide thus obtained subsequently is converted to sulfuric acid ($H_2SO_4$) by absorption in concentrated sulfuric acid, which intermediately results in the formation of disulfuric acid ($H_2S_2O_7$). Contained and/or added water ($H_2O$) leads to a reaction forming sulfuric acid:

$$SO_3 + H_2SO_4 \rightarrow H_2S_2O_7$$

$$H_2S_2O_7 + H_2O \rightarrow 2H_2SO_4$$

This process does not utilize 100% sulfuric acid, but one with 98 - 99.6% $H_2SO_4$, depending on the process parameters and the location of the azeotrope. The rest is water.

It is evident that current individual sulfuric acid plant capacities are large and in future will still be larger in size based on the economic reasons since larger single line plants bear a lower cost ticket per tonne of produced acid. Currently the largest plant size amounts to ~5,000 mtpd of Mh (metric tons per day of monohydrate (Mh = 100% $H_2SO_4$)). Therefore, there is a trend for lager plants, despite higher operational / availability risk.

Particular in very big plants, a heat recovery concept is one of the main aspects in improving the economic profitability of a plant.

An example for a process for the recovery of heat from the absorption section is found in WO2006/087150 A2 and WO2016/096867 A1, which relates to the arrangement of 2-stage absorption devices for the removal of $SO_3$ by concentrated sulfuric acid from a contact gas, and related acid coolers.

For the absorption of $SO_3$ in sulfuric acid, often at least one stage is defined as a venturi absorber. Such designs can be found in documents GB 1 252 363, US 3,944,401 and DE 2 255 029. Due to the large gas and liquid flows, one must expect a reduced absorption efficiency of the venturi-type absorber, based on the large throat-size and the fact that a uniform distribution of the liquid into the gas is becoming more complex and eventually insufficient to warrant a certain desired absorption efficiency for the SOs gas.

US 4,029,751 A is directed to the production of sulfuric acid from sulfur trioxide-containing humid gases. In a heterogeneously catalysed reaction, $SO_2$ is reacted to SOs and further fed via conduit 7 into a Venturi tube 8, in which the gas is directly cooled and most of the SOs contained in the gas is simultaneously condensed to $H_2SO_4$, which is why the Venturi 8 acts somehow as an absorber. However, document D1 is silent about any further details regarding this Venturi.

Further, document US 3,533,748 A deals with recovering of elemental sulfur, from sulfur oxides containing waste gas streams such as flue gas, by scrubbing the gas stream with an aqueous alkali solution. The solution absorbs the sulfur oxides, which react with alkali to form sulfite and sulfate in solution. The resulting solution is cooled to precipitate solid alkali metal sulfite and sulfate salts, which are separated from the solution and may be mixed with carbon. Thereby, scrubbing of the gas stream takes place in a venturi gas scrubber-absorber, which is provided with a throat section 4 for concentrated gas-liquid contact, a divergent section 5 for the recovery of gas pressure drop and a falling liquid section

for sulfur oxide absorption.

GB 1 397 256 A teaches a process for removing organic and/or inorganic sulphur compounds, which are oxidizable to elemental sulphur and/or to sulphur trioxide, and/or organic compounds which are oxidizable to carbon dioxide and water, from waste gases by treating them with dilute sulphuric acid containing peroxydisulfuric acid as an oxidizing agent. Thereby, diluted sulfuric acid is injected through a nozzle 13 of a Venturi-containing device 11 and mixed with a gas. A particulate packing layer 14 is disposed below the divergent portion of the Venturi nozzle, so the acid-gas mixture impinges upon and flow through the layer 14 so that gas and acid are more thoroughly mixed.

Fig.1 shows a standardized / normalized loss of absorption efficiency based on the applied standardized venturi size, not considering uneven flow distribution of liquid or gas.

However, the more SOs slips through the venturi pre-absorber into such a post-absorber, the more cold acid feed (typically 98.5% $H_2SO_4$ with a temperature of ~80 °C) to said post-absorber is needed to keep the system in the desired balance. This in turn would result in a larger discharge of hot acid from the systems pre-absorber (typically 99.5% $H_2SO_4$ with a temperature of 200 °C) to keep the overall SOs-balance, irrespective of the amount of SOs and $H_2O$ supplied to the system. The requirement of larger cold acid feed leads to a loss of usable energy for low-pressure steam production.

Summing up, larger sulphuric acid plants suffer from lower specific steam generation, i.e. lower energy recovery and thus higher operating cost / lower revenue. It is evident that such loss of efficiency would be detrimental to the overall energy efficiency of the sulfuric acid plant's heat recovery system. Therefore, big plants at least partially loose the advantage given by the capital cost savings via the economy of scale.

It is, therefore, the task underlying the invention to maximize the efficiency of the system with regard to SOs-absorption at the venturi (pre-absorber) and thus minimize the loss of energy for low-pressure steam generation.

This task is solved with a venturi absorber tube with the features of claim 1.

Such a venturi absorber tube for absorbing sulfur trioxide in sulfuric acid features a converging section (20), a throat section (30) and a diverging section (40). Refer Fig.2. Through a first inlet, hot process gas containing sulfur trioxide (21) is introduced. Moreover, the venturi contains a spray unit (22) for spraying sulfuric acid, preferably co-currently to the sulfur trioxide gas stream. Through a first outlet (52) liquid parts are withdrawn while gaseous parts are withdrawn through a second outlet (51). To increase the venturi's efficiency, an internal device (60) is located in or below the diverging section.

It is essential that this device is a sieve tray, a multi-venturi array or a self-supporting dome featuring a convex shape. The convex shape leads to a locally resolved different point of entry of the flow into this device. Thereby, the entry of the flow is earlier in the middle of the diverging section than at its borders. Having in mind a typical velocity profile in the diverging section, the velocity restriction is high in positions with high velocities and the restriction is lower in the border area with lower flow velocities.

As a result, subject of this invention is to keep the relatively cheap venturi device at larger acid plant capacities despite the loss of efficiency at large sizes, but compensate said loss by the introduction of an additional integrated device. Said device enables not only the compensation of said loss, but surprisingly increases the efficiency of the venturi type pre-absorber up to a factor of 2 in terms of slippage of unabsorbed SOs (penetration) from this pre-absorber (obviously gaseous SOs as per vapour pressure is excluded hereof). Due to this reason, the currently achievable absorption efficiency would be markedly increased independent of the plant size.

The effective open area of the device foreseen in the diverging section is between 40 and 80 %, preferably between 50 and 70 %. The open area a ratio that reflects how much of the sheet is occupied by holes, normally expressed by percent. For example, if the open area of the perforated sheet is 30%, it means that 30% of the sheet is holes and 70% of the sheet is material. The given ratio leads to a maximum of turbulences and, therefore, a higher absorption rate.

In another or supplemental embodiment, the venturi absorber tube features an angle $\alpha$ between the throat section and the diverging section within 5 and 20 °, preferably between 7 and 15°. In addition or alternatively, an angle $\beta$ between the throat section and the converging section is between 30 and 60 °, preferably between 40 to 50 °. At typical operation parameters, these values ensure very good gas-side mass-transfer coefficients and, *therefore,* optimized absorption rates.

Moreover, it is particular preferred that a venturi absorber tube according to the invention shows a distance $L_{d,ideal}$ between downward outlet of the throat section and the maximum of the device which is defined as

$$L_{d,ideal} = \frac{D_t * \left\{\sqrt{\frac{1}{os * v_t}} - 1\right\}}{2 * \sin\alpha}$$

Thereby, the used parameters are defined as follows:

$D_t$: diameter of the throat section
$L_d$: Length between lower end of the throat and the upward beginning of the device
$\alpha$: angle $\alpha$ between the throat section and the diverging section
vt: velocity of the gas stream at the lower end of the throat section
os: open area ratio of the device

Preferred is a distance $L_d$ in the range of 0,8 $L_{d,ideal}$ and 1,2 $L_{d,ideal}$, particularly preferred in a range of 0,9 $L_{d,ideal}$ and 1,1 $L_{d,ideal}$.
An installation of the device within the diverging section at the defined position has the advantage that the velocity profile is fully developed at typical operation parameters and the additional turbulences caused by the device have a maximum of effect. So, an optimized efficiency of the installation is achieved.
As a result, the diameter $D_{d,ideal}$ of the installed device can be defined as

$$D_{d,ideal} = D_t * \sqrt{\frac{1}{os * v_t}}$$

Preferred is a distance $D_d$ in the range of 0,8 $D_{d,ideal}$ and 1,2 $D_{d,ideal}$, particularly preferred in a range of 0,9 $D_{d,ideal}$ and 1,1 $D_{d,ideal}$.
As manufacturing material for the installed device, ceramic material is most preferred, as it as it offers high resistance to the prevailing conditions (acid concentration, high temperatures).
The invention further covers an absorption unit with at least two serial absorption stages, preferably within a plant for producing sulfuric acid. The features of current claim 6 define such an absorption unit. It is essential that the first absorption stage is a venturi absorber tube with the features of any of claims 1 to 5 as discussed above. An incorporation of the venturi into this system enables very good absorption rates of the sulfur trioxide, particularly in large capacity plants.
In this context, it is preferred that the second stage downstream of the venturi is a packed bed. Most preferably, the gas is flowing upwards through the bed and, thereby, flowing counter-current to the sulfuric acid introduced near the top of this second stage. As a result, complete absorption is achieved.
The invention also includes a process for the absorption of Sulphur trioxide with the characteristics of claim 8. Such a process uses a venturi as disclosed any of claims 1 to 6.
To use the amended geometry and its effect on the velocity profile best the ratio between the gas velocity in the venturi throat (measured at its end) and in the diverging section at the length $L_D$ is between 1.0 and 3.0, preferably between 1.5 and 2.5, more preferably between 1.7 and 2.3. This results in velocity profiles with additional turbulences after passing the installed device without any or at least too big droplet generation.
Additional features, advantages and possible applications of the invention are derived from the following description of exemplary embodiments and the drawings. All the features described and/or illustrated graphically here form the subject matter of the invention, either alone or in any desired combination, regardless of how they are combined in the claims or in their references back to preceding claims.
The drawings show schematically:

Fig. 1 Correlation between venturi efficiency and throat diameter,

Fig. 2 venturi design according to the invention and

Fig. 3 absorption system in a sulfuric acid plant according to the invention.

As discussed, fig. 1 shows the descending course of a venturi's relative efficiency depending on its normalized throat diameter. It clearly shows that the efficiency decreases with an increasing venturi size.
Fig 2 shows a venturi 10 according to the invention. Therein, sulfur trioxide is added, preferably over the top via conduit 21 in a converging section 20 of the venturi 10. In the converging section, also a device for introducing sulfuric acid 22, preferably spraying is foreseen, wherein the acid is fed via conduit 23. It is also in accordance with the invention

that the so-called converging section 20 is not completely converging, but only in its lower section where it leads into a throat section 20.

The throat section 30 is characterized by (essentially) vertically downward walls and has a wide $D_t$.

A diverging section 40 with an overall length $L_b$ and which opens with an angle $\alpha$ from the throat section 30. At its maximum width, it shows a wide $D_b$, which is also the width of the sump 50. From this sump, gaseous parts are withdrawn via conduit 51 while liquid parts are removed via conduit 51.

The essential idea of the invention is an additional internal device 60 mounted within or below the diverging section, featuring a convex shape in form of a smaller distance to the sump at the border area than from the middle of said device 60. This device can be designed as sieve tray, multi-venturi array, self-supporting dome or the like. It can be made of ceramic material, or an alloy material suitable and corrosion-resistant to the conditions of the hot, concentrated sulfuric acid.

Fig. 3 shows an absorber system for sulphuric acid with a first absorption stage 10 according to the current invention, particularly with device 60. From there, the gaseous parts are led via conduit 51 in a second absorption stage 70.

This second absorption stage preferably shows a packed bed 74, through which sulphuric acid trickles which is introduced via conduit 72 and device 73. Liquid parts as fed to the system via devices for introducing acid 22 and 73 can also be withdrawn combined or separately, preferably combined at the lower end of the second absorption stage 70, combined via conduit 71, or combined via conduit 52, while gaseous parts are discharged via conduit 75.

The first absorption stage 10 operated at elevated acid feed temperatures, typically between 180 and 230 °C. The produced heat is normally used for the generation of saturated steam of typically 4 to 12 bar, The second absorption stage for the removal of residual $SO_3$ (acc. to the vapour pressure and slip due to limited absorption efficiency of the pre-absorption device) is operated with lower feed acid temperatures around 80 °C.

### List of Reference Numerals

| | |
|---|---|
| 10 | venturi, first absorption stage |
| 20 | converging section |
| 21 | conduit |
| 22 | device for introducing sulfuric acid |
| 23 | conduit |
| 30 | throat section |
| 40 | diverging section |
| 50 | sump |
| 51 | conduit |
| 52 | conduit |
| 60 | internal device |
| 70 | second absorption stage |
| 71, 72 | conduit |
| 73 | device for introducing sulfuric acid |
| 74 | packed bed |
| 75 | conduit |
| $\alpha$ | angle between the throat section and the diverging section |
| $D_t$ | diameter of the throat section |
| $D_a$ | diameter of the internal device |
| $D_b$ | diameter of the sump |
| $L_d$ | Length between lower end of the throat and the upward beginning of the device |
| $L_b$ | Length of the diverging section |

### Claims

1. A venturi absorber tube for absorbing sulfur trioxide in sulfuric acid, whereby the venturi features a converging section (20), a throat section (30) and a diverging section (40), with a first conduit (21) at its top through which hot process gas containing sulfur trioxide is introduced, with a device for introducing sulfuric acid (22) by spraying sulfuric acid co-currently to the sulfur trioxide gas stream, a conduit (52) to withdraw liquid parts and a conduit (51) to withdraw gaseous parts, an internal device (60) located in or below the diverging section (40), **characterized in that** the internal device (60) is a sieve tray, a multi-venturi array or a self-supporting dome featuring a convex shape

and
that the effective open space ratio of the internal device (60) is between 40 and 80 %, i.e. a fraction of 0.40 to 0.80, preferably between 0.50 and 0.70.

2. Venturi absorber tube according to claim 1, **characterized in that** the angle $\alpha$ between the throat section (30) and the diverging section (40) is between 5 and 20 °, preferably between 7 and 15°, and/or that the angle $\beta$ between the throat section (30) and the converging section (20) is between 15 and 45 °.

3. Venturi absorber tube according to any of the previous claims, **characterized in that** distance $L_d$ between throat section (30) and the internal device (60) is set in a range $0{,}8L_{d,ideal}$ and 1,2 $L_{d,ideal}$, whereby $L_{d,ideal}$ is defined as

$$L_{d,ideal} = \frac{D_t * \left\{ \sqrt{\frac{1}{os * v_t}} - 1 \right\}}{2 * \sin\alpha}$$

with $D_t$: diameter of the throat section (30)

$L_d$ : Length between throat (30) and device (60)
$\alpha$ : angle $\alpha$ between the throat section (30) and the diverging section (40)
$v_t$: velocity of the gas stream at the throat (section (30)
os : Open space ratio of the internal device (60)

4. Venturi absorber tube according to any of the previous claims, **characterized in that** the device (60) is made of ceramic material.

5. Plant for producing sulfuric acid wherein gaseous sulfur trioxide is absorbed in at least two absorption stages (10, 70), **characterized in that** the first absorption stage (10) is a venturi absorber tube with the features of any of claims 1 to 4.

6. Plant for producing sulfuric acid according to claim 6, **characterized in that** the second stage (70) is a packed bed.

7. Process for producing sulfuric acid, **characterized in that** gaseous sulfur trioxide is absorbed in a venturi absorber tube according to any of claims 1 to 4.

8. Process for producing sulfuric acid according to claim, **characterized in that** the ratio between the gas velocity in the venturi throat and the velocity downwards of the device(5) is between 0.5 and 1.5.

**Patentansprüche**

1. Venturi-Absorberrohr zur Absorption von Schwefeltrioxid in Schwefelsäure, wobei der Venturi einen konvergierenden Abschnitt (20), einen Halsabschnitt (30) und einen divergierenden Abschnitt (40) aufweist, mit einer ersten Leitung (21) an seinem oberen Ende, durch die heißes, schwefeltrioxidhaltiges Prozessgas eingeleitet wird, mit einer Vorrichtung zum Einleiten von Schwefelsäure (22) durch Versprühen von Schwefelsäure im Gleichstrom zum Schwefeltrioxid-Gasstrom, einer Leitung (52) zur Entnahme von flüssigen Anteilen und einer Leitung (51) zur Entnahme von gasförmigen Anteilen, einer Vorrichtung im Inneren (60), die in oder unterhalb des divergierenden Abschnitts (40) angeordnet ist, **dadurch gekennzeichnet, dass** die Vorrichtung im Inneren (60) ein Siebboden, eine Multiventuri-Anordnung oder eine selbsttragende Kuppel mit einer konvexen Form ist und dass das effektive Verhältnis des freien Raums der Vorrichtung im Inneren (60) zwischen 40 und 80 % liegt, d.h. ein Anteil von 0,40 bis 0,80, vorzugsweise zwischen 0,50 und 0,70.

2. Venturi-Absorberrohr nach Anspruch 1, **dadurch gekennzeichnet, dass** der Winkel $\alpha$ zwischen dem Halsabschnitt (30) und dem divergierenden Abschnitt (40) zwischen 5 und 20°, vorzugsweise zwischen 7 und 15°, beträgt und/oder dass der Winkel $\beta$ zwischen dem Halsabschnitt (30) und dem konvergierenden Abschnitt (20) zwischen 15 und 45° beträgt.

3. Venturi-Absorberrohr nach einem der vorhergehenden Ansprüche, **dadurch gekennzeichnet, dass** der Abstand $L_d$ zwischen dem Halsabschnitt (30) und der Vorrichtung im Inneren (60) in einem Bereich von 0,8 $L_{d,ideal}$ und 1,2 $L_{d,ideal}$ eingestellt ist, wobei $L_{d,ideal}$ definiert ist als

$$L_{d,ideal} = \frac{D_t * \left\{\sqrt{\frac{1}{os * v_t}} - 1\right\}}{2 * \sin\alpha}$$

Mit $D_t$: Durchmesser des Halsteils (30)
$L_d$ : Länge zwischen Halsteil (30) und Vorrichtung (60)
$\alpha$ : Winkel $\alpha$ zwischen Halsteil (30) und divergierendem Abschnitt (40)
vt: Geschwindigkeit des Gasstroms an dem Halsteil (30)
os : Verhältnis des freien Raums der Vorrichtung im Inneren (60)

4. Venturi-Absorberrohr nach einem der vorhergehenden Ansprüche, **dadurch gekennzeichnet, dass** die Vorrichtung (60) aus keramischem Material hergestellt ist.

5. Anlage zur Herstellung von Schwefelsäure, bei der gasförmiges Schwefeltrioxid in mindestens zwei Absorptionsstufen (10, 70) absorbiert wird, **dadurch gekennzeichnet, dass** die erste Absorptionsstufe (10) ein Venturi-Absorberrohr mit den Merkmalen eines der Ansprüche 1 bis 4 ist.

6. Anlage zur Herstellung von Schwefelsäure nach Anspruch 5, **dadurch gekennzeichnet, dass** die zweite Stufe (70) ein Festbett ist.

7. Verfahren zur Herstellung von Schwefelsäure, **dadurch gekennzeichnet, dass** gasförmiges Schwefeltrioxid in einem Venturi-Absorberrohr nach einem der Ansprüche 1 bis 4 absorbiert wird.

8. Verfahren zur Herstellung von Schwefelsäure nach Anspruch 7, **dadurch gekennzeichnet, dass** das Verhältnis zwischen der Gasgeschwindigkeit in dem Venturi Halsabschnitt und der nach unten gerichteter Geschwindigkeit in der Vorrichtung (5) zwischen 0,5 und 1,5 liegt.

## Revendications

1. Tube absorbeur de type Venturi permettant d'absorber du trioxyde de soufre dans de l'acide sulfurique, dans lequel le venturi comporte une section convergente (20), une section de gorge (30) et une section divergente (40), avec un premier conduit (21) à son sommet par lequel le gaz de traitement chaud contenant du trioxyde de soufre est introduit, avec un dispositif pour introduire de l'acide sulfurique (22) en pulvérisant de l'acide sulfurique en même temps que le flux de gaz de trioxyde de soufre, un conduit (52) permettant de prélever des parties liquides et un conduit (51) permettant de prélever des parties gazeuses, un dispositif interne (60) situé dans ou sous la section divergente (40), **caractérisé en ce que** le dispositif interne (60) est un plateau de tamisage, un réseau multi-venturi ou un dôme autoportant de forme convexe et
**en ce que** le taux d'espace ouvert effectif du dispositif interne (60) est compris entre 40 et 80 %, c'est-à-dire une fraction allant de 0,40 à 0,80, de préférence allant de 0,50 à 0,70.

2. Tube absorbeur de type Venturi selon la revendication 1, **caractérisé en ce que** l'angle a entre la section de gorge (30) et la section divergente (40) est compris entre 5 et 20°, de préférence entre 7 et 15°, et/ou **en ce que** l'angle $\beta$ entre la section de gorge (30) et la section convergente (20) est compris entre 15 et 45°.

3. Tube absorbeur de type Venturi selon l'une quelconque des revendications précédentes, **caractérisé en ce que** la distance $L_d$ entre la section de gorge (30) et le dispositif interne (60) est comprise entre 0,8$L_{d,ideal}$ et 1,2 $L_{d,ideal}$, $L_{d,ideal}$ étant défini comme suit

$$L_{d,ideal} = \frac{D_t * \left\{ \sqrt{\frac{1}{os * v_t}} - 1 \right\}}{2 * \sin \alpha}$$

avec $D_t$ : diamètre de la section de la gorge (30)

$L_d$ : longueur entre le col (30) et le dispositif (60)
$\alpha$ : angle a entre la section du col (30) et la section divergente (40)
$V_t$ : vitesse du flux de gaz au niveau du collet (30)
os : rapport d'espace ouvert du dispositif interne (60)

**4.** Tube absorbeur de type Venturi selon l'une quelconque des revendications précédentes, **caractérisé en ce que** le dispositif (60) est en matériau céramique.

**5.** Installation de production d'acide sulfurique dans laquelle le trioxyde de soufre gazeux est absorbé dans au moins deux étages d'absorption (10, 70), **caractérisée en ce que** le premier étage d'absorption (10) est un tube absorbeur Venturi présentant les caractéristiques décrites dans l'une quelconque des revendications 1 à 4.

**6.** Installation de production d'acide sulfurique selon la revendication 6, **caractérisée en ce que** le deuxième étage (70) est un lit garni.

**7.** Procédé de production d'acide sulfurique, **caractérisé en ce que** le trioxyde de soufre gazeux est absorbé dans un tube absorbeur Venturi selon l'une quelconque des revendications 1 à 4.

**8.** Procédé de production d'acide sulfurique selon la revendication 7, **caractérisé en ce que** le rapport entre la vitesse du gaz dans le col du Venturi et la vitesse vers le bas du dispositif (5) est compris entre 0,5 et 1, S.

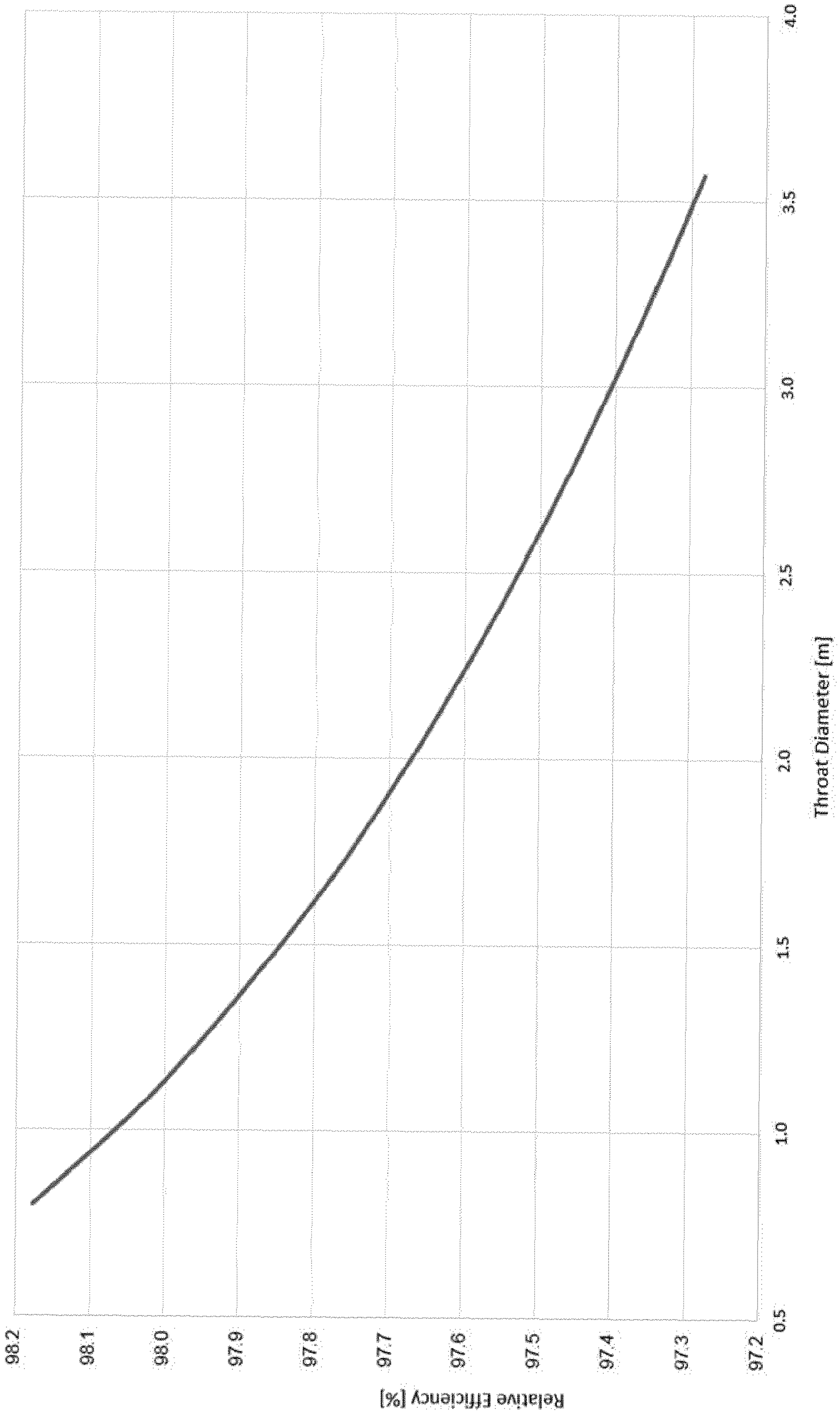
Relative Efficiency [%]
98.2
98.1
98.0
97.9
97.8
97.7
97.6
97.5
97.4
97.3
97.2
Throat Diameter [m]
0.5
1.0
1.5
2.0
2.5
3.0
3.5
4.0

Fig. 1

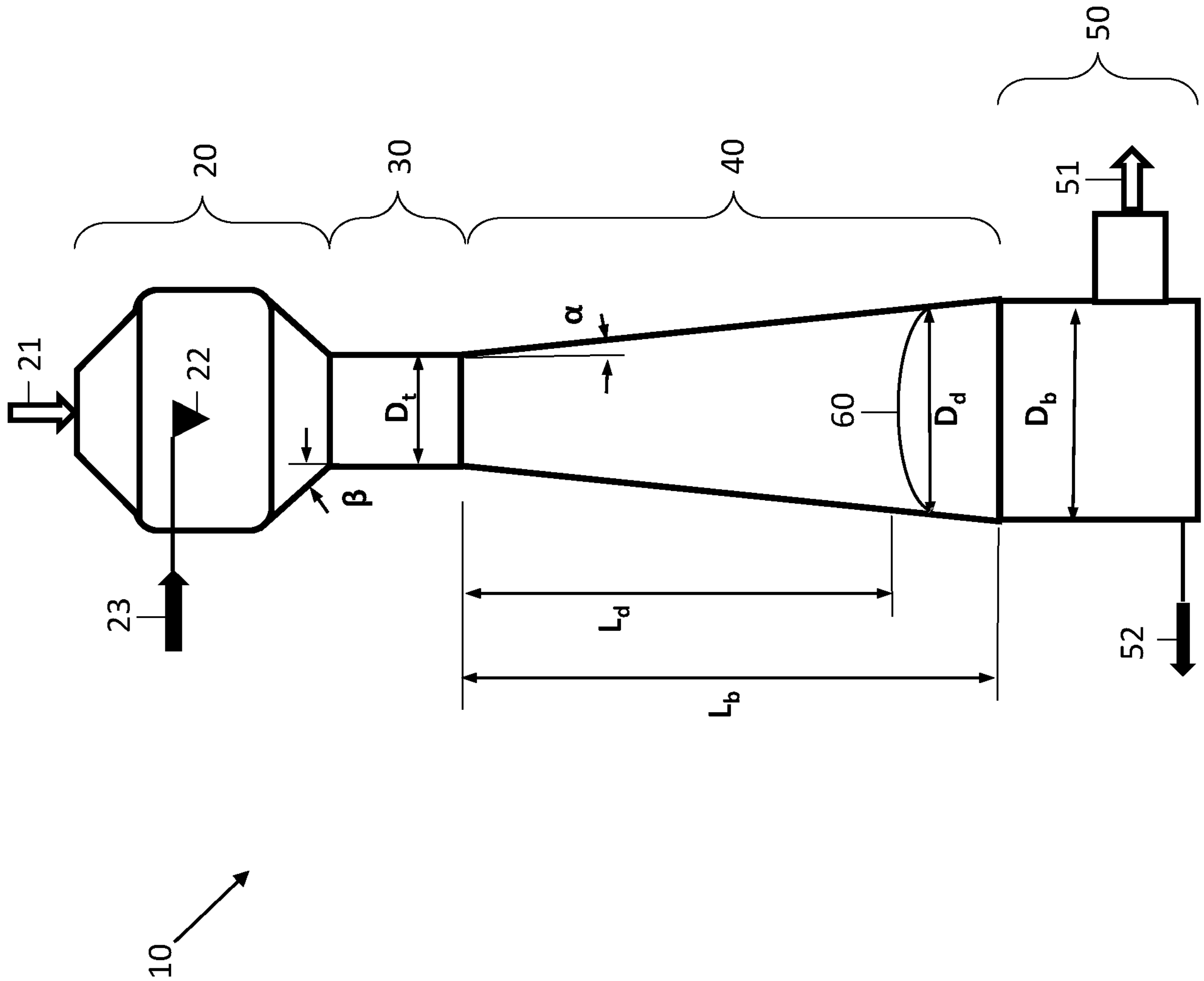


Fig. 2

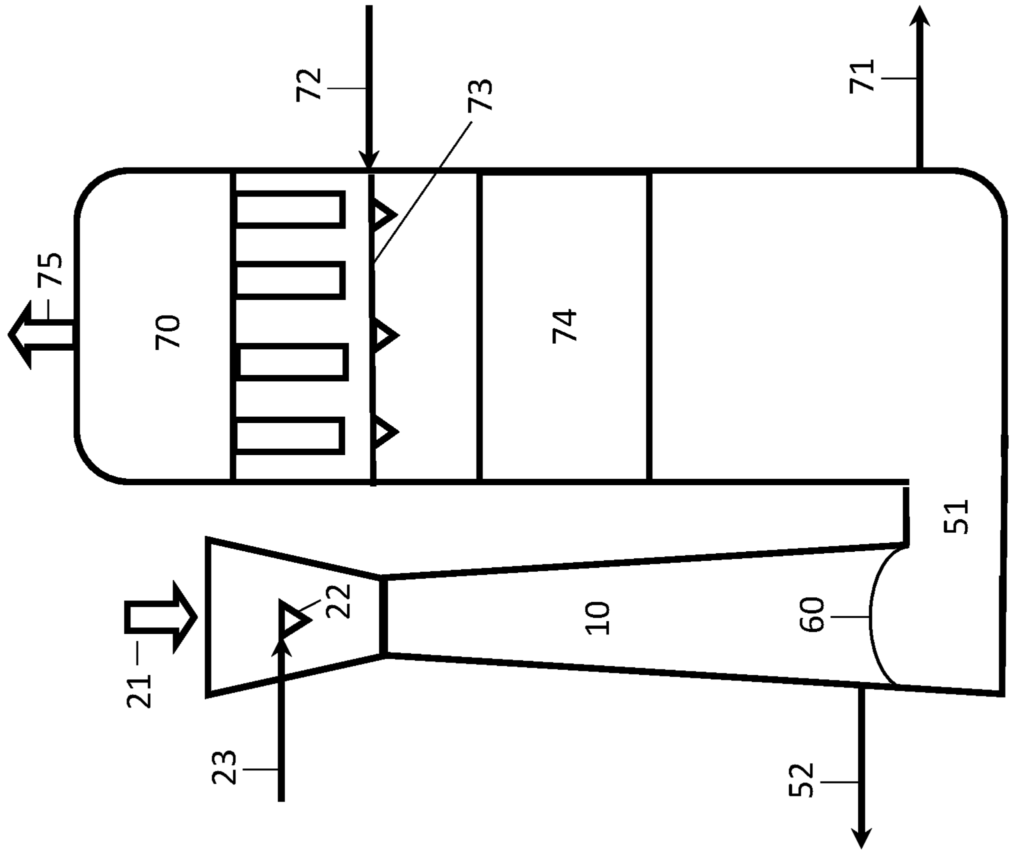


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006087150 A2
- WO 2016096867 A1
- GB 1252363 A
- US 3944401 A
- DE 2255029
- US 4029751 A
- US 3533748 A
- GB 1397256 A